# EUROPÄISCHE PATENTSCHRIFT

(11) **EP 0 491 245 B1**
(45) Veröffentlichungstag und Bekanntmachung des Hinweises auf die Patenterteilung: **08.11.1995**
(21) Anmeldenummer: 91120917.9
(22) Anmeldetag: 05.12.1991
(51) Int. Cl.: H04Q 1/14, H02B 1/20

(54) **Trägereinheit für Anschlussleisten eines Verteilers in Telekommunikationsanlagen**
Support unit for distributor connector blocks in telecommunication installations
Unité de support pour blocs de connexion d'un distributeur pour installations de télécommunication

(30) Priorität: 19.12.1990 DE 4040755
(43) Veröffentlichungstag der Anmeldung: 24.06.1992
(73) Patentinhaber: SIEMENS AKTIENGESELLSCHAFT, 80333 München (DE)
(72) Erfinder: Knoll, Rudolf, Dipl.-Ing., W-8137 Berg 3 (DE)

(56) Entgegenhaltungen:
- EP-A- 0 133 824
- EP-A- 0 419 719
- DE-A- 2 657 312
- DE-U- 9 013 646
- DE-U- 9 017 155
- FR-A- 2 498 865
- FR-A- 2 589 291
- FR-A- 2 594 623
- FR-A- 2 609 229
- US-A- 4 470 102
- US-A- 4 737 985

## Beschreibung

Die Erfindung betrifft eine Verteilereinrichtung mit einer Trägereinheit zur Bestückung sowohl mit zum Anschließen und zum Verbinden von abgehenden und ankommenden elektrischen Leitungen dienenden Anschlußleisten eines Verteilers einer Telekommunikationsanlage als auch mit weiteren Funktionsteilen, die einen solchen Verteiler mitbilden und wobei sie zur Herstellung eines gebrauchsfertigen Montagezustandes ihrerseits mit mindestens einem für diese Endmontage verwendeten Halteelement fest verbindbar sind, wobei die Trägereinheit durch ein metallisches, im wesentlichen U-förmig ausgestaltetes Strangpreßprofil gebildet ist, daß dessen einzelne Wandteile zur Befestigung der vorgesehenen Funktionsteile jeweils in Längsrichtung durchgehende Ausformungen aufweisen, die als Schraub-, Klemm- und Steckkanäle verwendbar sind, und wobei an der Stirnseite eines jeden Schenkels des U-förmig ausgebildeten Strangpreßprofils jeweils eine für die Befestigung der Anschlußleisten in Längsrichtung durchgehende Ausformung vorgesehen ist.

Eine derartige Verteilereinrichtung ist z.B. aus der EP-A-0 133 824 bekannt. Bei dieser bekannten Verteilereinrichtung sind die einzelnen Anschlußleisten sowie die weiteren notwendigen Funktionsteile auf die Trägereinheit aufgeklemmt, was die Endmontage der an- und abgehenden Leitungen erschwert.

Aufgabe der vorliegenden Erfindung ist es, eine Verteilereinrichtung der eingangs genannten Art anzugeben, bei der die Montage der ankommenden und abgehenden Leitungen leicht durchgeführt werden kann.

Diese Aufgabe wird erfindungsgemäß für eine Verteilereinrichtung der obengenannten Art dadurch gelöst, daß an der freien Kante des einen Schenkels eine zumindest halbzylindrische Ausformung und an der freien Kante des anderen Schenkels ein Schraubkanal gebildet ist, wobei jede Anschlußleiste aufgrund eines an ihrer jeweils einen Stirnseite vorhandenen, der Ausformung angepaßten Ausschnitts darauf unter zumindest teilweiser Umschließung dieser Ausformung aufsteckbar ist und daß die jeweils andere Stirnseite vermittels eines entsprechenden Befestigungsflansches unter Verwendung des genannten Schraubkanals fixierbar ist.

Bei der erfindungsgemäßen Verteilereinrichtung sind die einzelnen Anschlußleisten um eine als Drehachse wirkende Kante drehbar gelagert. Durch die drehbare Lagerung wird die Verdrahtung der ankommenden und abgehenden Leitungen erheblich erleichtert, und es ist selbst bei voll eingebrachter Rangierung ein Schwenken für den Fall einer Fehlersuche oder für den Fall einer Reparatur möglich.

Aus der FR-A-2 498 865 ist zwar eine Verteilereinrichtung bekannt, bei welcher die einzelne Anschlußleiste einseitig drehbar gelagert ist, jedoch ist diese Verteilerleiste im Aufbau ungleich komplizierter, da zusätzliche Stützteile notwendig sind, welcher außerdem sehr aufwendig in ihrer Herstellung sind.

Vorteilhafte Ausgestaltungen der Erfindung sind den Unteransprüchen zu entnehmen.

Im folgenden wird die Erfindung anhand eines in der Zeichnung dargestellten Ausführungsbeispiels näher erläutert.

Dabei zeigen
- FIG 1: einen Querschnitt durch eine Trägereinheit,
- FIG 2: die Explosionsdarstellung einer Verteilereinheit, und
- FIG 3: die Draufsicht auf die Vorderseite einer solchen Verteilereinheit.

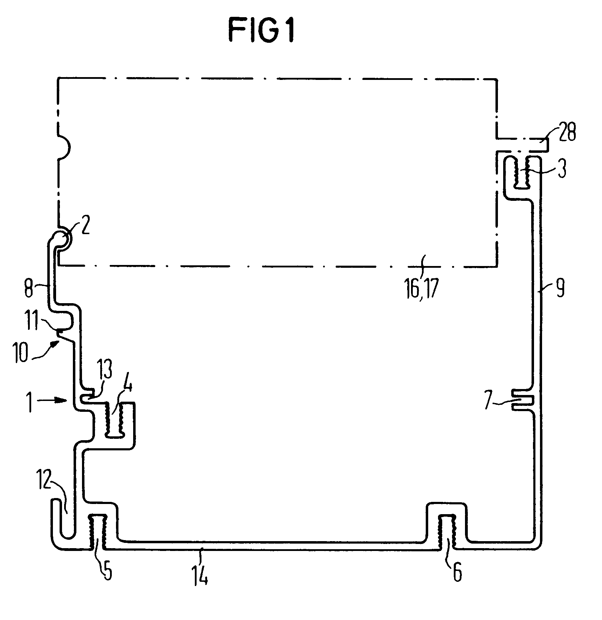

Die in der FIG 1 gezeigte Trägereinheit 1 ist U-förmig ausgestaltet. Sowohl die beiden Schenkel 8 bzw. 9 als auch das diese beiden Schenkel zur U-Form verbindende Dach 14 zeigen ganz bestimmte Ausformungen. Ein solches Trägerteil nimmt zur Bildung eines Verteilerblockes eine Mehrzahl von Anschlußleisten 16 bzw. 17 auf, die längsseitig aneinandergereiht sind. Das Trägerteil 1 ist als Strangpreßprofil hergestellt, wobei dann jeweils eine beliebige Längenabmessung durch einfaches Abtrennen von der "Meterware" gewonnen wird. Die freie Kante der einen Seitenwand des Trägerteils 1 hat eine durchgehende, gegebenenfalls leicht nach innen geneigte vollzylindrische Form 2. Auf diese vollzylindrische Form 2 wird eine Anschlußleiste 16 bzw. 17, die mit einem daran angepaßten Ausschnitt versehen ist, aufgesteckt. Die Anschlußleiste kann dann scharniergelenkartig bewegt werden. Es ergibt sich also für eine einfache Befestigung und Handhabung ein Drehpunkt. Der andere Schenkel 9 weist an der freien Oberkante einen durchgehenden Kanal 3 auf. Nach dem erfolgten Aufstecken einer Anschlußleiste, die in der FIG 1 strichpunktiert angedeutet ist, auf die als vollzylindrische Form 2 ausgebildete Kante des Schenkels 8 ist an einer beliebigen längsseitigen Stelle des Trägerteils jede Anschlußleiste mit ihrem daran angesetzten Flansch 28 an dem Trägerteil 1 befestigt. An der einen Stirnseite der Anschlußleiste kann noch - wie angedeutet - ein weiterer an die vollzylindrische Form 2 angepaßter Ausschnitt vorgesehen sein. Dadurch kann die Anschlußleiste bei der Anbringung von zugentlastenden Leitern zur Belegung ihrer jeweiligen Anschlußelemente mit derartigen Leitern bzw. zur Änderung in der Belegung um 180° gedreht und durch einfaches Aufstecken und Festschrauben für diese vorzunehmende Bearbeitung befestigt werden. Es sind deshalb problemlos solche Anschlußleisten zu verwenden, bei denen in einer platzsparenden und preiswerten Weise die Anschlußelemente an den sich gegenüberliegenden Längsseiten dieser Leiste vorgesehen. Danach sind z. B. die Anschlußelemente für die selten zu ändernden und zur Vermittlungseinrichtung führenden Leitungen auf der Rückseite der Leiste angeordnet. Diese abgehenden Leitungen der Internseite können bereits werksseitig angeschlossen werden. Es werden dann lediglich die Teilnehmerleitungen bzw. die zu anderen Stockwerksverteilern führenden Leitungen nachträglich an die Anschlußelemente der zugehörigen Verteilerleisten angeschlossen. Diese Anschlußelemente sind nach wie vor an der vorderen Bedienungsseite vorgesehen. Diese Seite der Leisten ist somit leicht zugänglich, so daß Änderungen in der Belegung der Leiste leicht vorgenommen werden können.

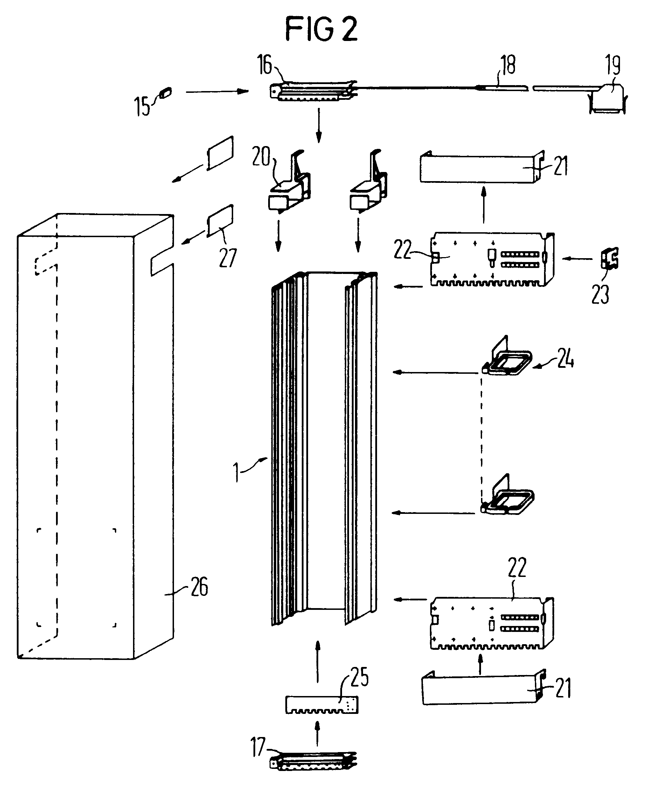

Zur geordneten Führung der Leitungen sind an dem einen Schenkel 8 des U-förmigen Profils bügel- oder hakenförmige Drahtführungselemente 24 (siehe Fig.2) in einfacher Weise aufzuschnappen. Zu diesem Zweck ist an der Außenwandung des Schenkels 8 in ihrem unteren Bereich eine kanalartige Ausformung 12 vorhanden. Weiterhin ist an dieser Außenwandung ein im stumpfen Winkel nach außen weisender Ansatz 11 vorhanden. Durch diese Formgebung wird eine Auflaufschräge 10 für das einzuklemmende Drahtführungselement, das beispielsweise als sogenannter "Rangierhaken 24" ausgebildet ist, erzielt. Mit diesen, je nach Bedarf, in das geschilderte Profil eingeschnappten Rangierhaken wird somit ein senkrechter Kanal zur Führung der Leitungen zur Verfügung gestellt. An der Dachwandung 14 des U-förmigen Profils sind weitere Schraubkanäle 5 bzw. 6 ausgeformt. Zur Wandbefestigung wird als Grundeinheit zur Montage das auf die entsprechende Längenabmessung gebrachte Trägerteil 1 mit zwei Abstandsplatten 22 (siehe Fig.2) verschraubt. Hierzu werden als Schraubkanäle die Ausformungne 5 bzw. 6 verwendet, so daß diese Platte 22 an beliebiger Stelle an dem Trägerteil, beispielsweise durch die Verwendung von selbstschneidenden Schrauben, befestigt werden kann. Mit einer solchen Platte kann dann auch nach der Montage ein bestimmter Abstand zwischen jeden Verteilerblock und einer Wandfläche eingehalten werden. In diesen Wandabstandsbereich sind ankommende oder abgehende Kabel zu führen.

An der Innenwand der Schenkel 8 bzw. 9 sind Ausformungen vorgesehen, die einen Nut 13 bzw. 7 ergeben. Zumindest an der einen Innenwandseite ist ein weiterer Schraubkanal 4 ausgeformt, dessen Oberkante sinnvollerweise nicht über die Unterkante der Nut 13 hinausreicht. Damit ist es beispielsweise möglich, in den Innenraum des Profils in diese Nuten 13 bzw. 7 Stege 25 einzuschieben. Mit Hilfe des Schraubkanals und der Anwendung von beispielsweise selbstschneidenden Schrauben sind dann diese Stege an beliebiger Stelle zu fixieren. Damit ist in einfacher Weise eine Unterteilung des Innenraums der U-förmigen Trägereinheit in zwei Teilbereiche möglich. Durch die in die innenseitig angebrachten Nuten 13 bzw. 7 einzuführenden Stege können auch zusätzliche Baugruppen bzw. Baueinheiten befestigt werden.

Die bereits erwähnte Platte 22, die Rangierhaken 24 und die Stege 25 sowie die Anschlußleisten 16 bzw. 17 sind als aufzubringende Einzelteile in der Explosionsdarstellung nach der FIG 2 gezeigt. Die Anschlußleiste 16 kann beispielsweise als sogenannte Trennleiste dienen, an der Anschlußelemente die zur Vermittlungseinrichtung führenden Kabel 18 - wie bereits erwähnt - angeschlossen werden. Die einzelnen Leiter des Kabels 18 sind an ihrer anderen Anschlußseite mit einer Steckeinrichtung 19 verbunden. Als weitere Elemente einer Verteilereinheit können Zusatzschienen 21 vorgesehen sein, die in einfacher Weise an der oberen Kante der seitlich überstehenden Platte 22 einzuhängen sind. Diese Schienen sind mit einer Universallochung versehen, um den Einbau unterschiedlicher Zusatzmodule oder Sonderbauteile zu ermöglichen.

Auf die obere Kante des in senkrechter Ausrichtung montierten Profilteils 1 können Bügel 20 aufgesteckt werden. Diese Bügel dienen zur Bildung von querlaufenden Rangierkanälen in denjenigen Fällen, in denen sich an eine Verteilereinheit unmittelbar benachbart jeweils eine weitere Verteilereinheit anschließt. Bei mehr als einer Verteilereinheit werden dann durch diese Bügel 20 gleichzeitig die darin geführten Leitungen vor Verletzungen beispielsweise durch die Blechkanten einer weiterhin aufzubringenden Abdeckhaube 26 geschützt. Für eventuelle Querkanäle weist diese Abdeckhaube 26 beidseitig Freinehmungen auf, die mit eingeschobenen und verrasteten Kunststoffteilen 27 abgedeckt werden, wenn keine Querkanäle notwendig sind. Zur Befestigung dieser Abdeckhaube sind im Normalfall keine zusätzlichen Teile erforderlich, sondern sie wird in einfacher Weise über die überstehende Kante der Platte 22 gehängt.

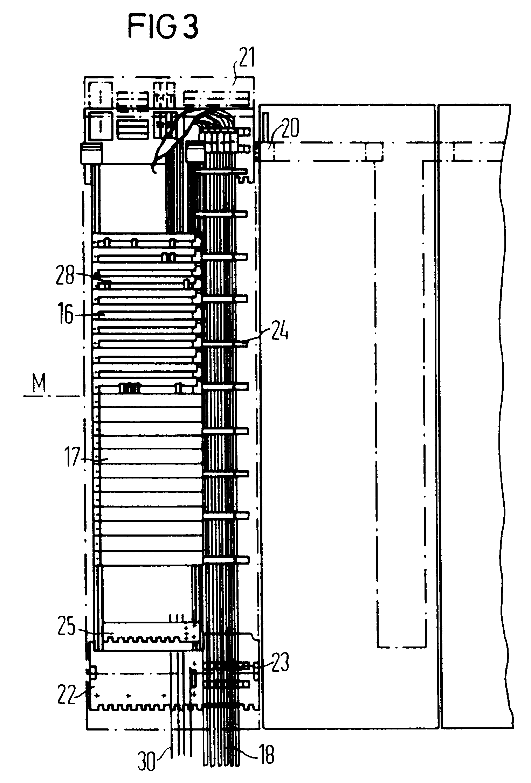

Die Draufsicht auf die Vorderseite der Verteilereinheit nach der FIG 3 läßt erkennen, daß für die Anschlußleisten zwei Bereiche vorgesehen sind. Ausgehend von einer vorgegebenen Markierungslinie M ist oberhalb dieser Linie ein Feld von Anschlußleisten vorhanden, die z. B. als Trennleisten der Internseite zugeordnet sind, d. h. die an diese Leisten anzuschließenden Leitungen 18 führen zur Vermittlungseinrichtung. Diese Leitungen werden an der über das Profil der Trägereinheit 1 seitlich hinausreichenden Platte 22, z. B. mittels Federschellen 23, die in hierfür vorgesehene Ausschnitte eingeschoben werden können, befestigt. Das Einlegen, Kontaktieren und Befestigen dieser Systemleitungen auf den Platten 22 ist vom Profil weg vorgesehen, um bei einer späteren Erweiterung ein Durchfädeln zu vermeiden. Von der Befestigungsstelle an der oberen Platte werden die einzelnen Leiter von oben zu den einzelnen Leisten 16 geführt und mit den Anschlußelementen an ihrer Unterseite verbunden. Diese Anschlußelemente sind in der Regel als Klemmelemente ausgebildet, die den abisolierfreien Anschluß der elektrischen Leiter gestatten. Die an der Oberseite einer jeden Leiste vorhandenen Anschlußelemente sind für die im Rahmen der sogenannten Rangierung zu belegenden variablen Anschlüsse vorgesehen. Sie sind von vorne gut erreichbar. An die der Internseite zugeordneten Anschlußleisten 16 sind bedarfsweise Schutzstecker 15 aufzustecken.

Es wird nun mit den Leitern des Externkabels 30 nicht unmittelbar rangiert, sondern die Leiter werden an Anschlußelemente der unterhalb der Markierungslinie M angeordneten Rangierleisten angeklemmt. Es wird dann die eigentliche Rangierung zwischen den jeweils an der Vorderseite vorhandenen Anschlußelementen der Trennleisten und den Anschlußelementen der Rangierleisten vorgenommen. Durch die von einer bestimmten Markierung aus erfolgenden Trennung der Leistenfelder wird die Erweiterung des Verteilers erleichtert, da von dieser Markierung weg nach unten bzw. nach oben ausgebaut wird. In der FIG 3 ist angedeutet, daß eine ohne Abdeckhaube dargestellte Verteilereinheit durch weitere solche Einheiten erweiterbar ist. Der in einem solchen Fall auf die obere Kante des Strangpreßprofils aufgesteckte Bügel 20 greift zumindest geringfügig in den Bereich des unmittelbar benachbarten Verteilerblocks ein. Dadurch werden die Kanten der aufgebrachten Abdeckhauben 26 gleichfalls abgedeckt, so daß keine Verletzung der Isolierung der querlaufenden Leitungen erfolgen kann.

Die Platte 22 reicht sowohl an der einen Seite als auch geringfügig an der anderen Seite des Profils über dieses hinaus. Dadurch besteht die Möglichkeit, die Abdeckhaube 26 unmittelbar auf diese überstehenden Kanten der Platte aufzulegen.

## Patentansprüche

1. Verteilereinrichtung mit einer Trägereinheit (1) zur Bestückung sowohl mit zum Anschließen und zum Verbinden von abgehenden und ankommenden elektrischen Leitungen dienenden Anschlußleisten (16, 17) eines Verteilers einer Telekommunikationsanlage als auch mit weiteren Funktionsteilen, die einen solchen Verteiler mitbilden und wobei sie zur Herstellung eines gebrauchsfertigen Montagezustandes ihrerseits mit mindestens einem für diese Endmontage verwendeten Halteelement (22) fest verbindbar sind, wobei die Trägereinheit (1) durch ein metallisches, im wesentlichen U-förmig ausgestaltetes Strangpreßprofil (1) gebildet ist, daß dessen einzelne Wandteile (8, 9 und 14) zur Befestigung der vorgesehenen Funktionsteile (22, 25, 24, 20) jeweils in Längsrichtung durchgehende Ausformungen (11, 12, 13, 4...6, 7) aufweisen, die als Schraub-, Klemm- und Steckkanäle verwendbar sind, und wobei an der Stirnseite eines jeden Schenkels (8, 9) des U-förmig ausgebildeten Strangpreßprofils (1) jeweils eine für die Befestigung der Anschlußleisten in Längsrichtung durchgehende Ausformung (2, 3) vorgesehen ist,
**dadurch gekennzeichnet**,
daß an der freien Kante des einen Schenkels (8) eine zumindest halbzylindrische Ausformung (2) und an der freien Kante des anderen Schenkels (9) ein Schraubkanal (3) gebildet ist, wobei jede Anschlußleiste (16, 17) aufgrund eines an ihrer jeweils einen Stirnseite vorhandenen der Ausformung (2) angepaßten Ausschnitts darauf unter zumindest teilweiser Umschließung dieser Ausformung (2) aufsteckbar ist und daß die jeweils andere Stirnseite vermittels eines entsprechenden Befestigungsflansches (28) unter Verwendung des genannten Schraubkanals (3) fixierbar ist.

2. Verteilereinrichtung nach Anspruch 1,
**dadurch gekennzeichnet**,
daß ein der Ausformung (2) angepaßter Ausschnitt jeweils am freien Rand mindestens eines in Längsrichtung der Anschlußleiste weisenden Steges vorgesehen ist.

3. Verteilereinrichtung nach Anspruch 1,
**dadurch gekennzeichnet**,
daß ein der Ausformung (2) angepaßter Ausschnitt am oberen und unteren Endbereich eines jeden Steges vorhanden ist.

4. Verteilereinrichtung nach einem der vorhergehenden Ansprüche,
**dadurch gekennzeichnet**,
daß bei ihrer in vertikaler Ausrichtung erfolgenden Montage die Leitungen (18) der sogenannten Internseite vom oberen Ende her zu den ihnen zuzuordnenden Anschlußleisten (16) geführt sind, daß ausgehend von einer vorgegebenen Markierungslinie (M) die der Internseite zugehörigen Anschlußleisten (16) nach oben und die der Externseite zugehörigen Anschlußleisten nach unten jeweils aufeinanderfolgend angebracht werden.

## Claims

1. Distributor device having a support unit (1) for population both with connection strips (16, 17), serving to connect outgoing and incoming electrical lines, of a distributor of a telecommunications installation and with further functional parts, which contribute to the formation of such a distributor and for their part, for the production of a ready-to-use assembly state, can be permanently connected to at least one holding element (22) used for this final assembly, the support unit (1) being formed by a metallic extruded profile (1) of essentially U-shaped configuration in such a way that the individual wall parts (8, 9 and 14) of the said profile each have continuous mouldings (11, 12, 13, 4...6, 7), which can be used as screw, clip and plug channels, in the longitudinal direction for the purpose of securing the functional parts (22, 25, 24, 20) provided, and a respective continuous moulding (2, 3) in the longitudinal direction for securing the connection strips being provided at the end of each limb (8, 9) of the extruded profile (1) of U-shaped design, characterised in that an at least semi-cylindrical moulding (2) is formed on the free edge of one limb (8) and a screw channel (3) is formed on the free edge of the other limb (9), it being possible to plug thereon each connection strip (16, 17), on account of a cutout which is present on one respective end of the said strip and is matched to the moulding (2), the said moulding (2) being at least partially enclosed, and in that the other respective end can be fixed by means of a corresponding securing flange (28) with the use of the said screw channel (3).

2. Distributor device according to Claim 1, characterized in that a cutout matched to the moulding (2) is provided in each case on the free edge of at least one web pointing in the longitudinal direction of the connection strip.

3. Distributor device according to Claim 1, characterized in that a cutout matched to the moulding (2) is present at the upper and lower end region of each web.

4. Distributor device according to one of the preceding claims, characterized in that when the lines (18) of the so-called internal side are assembled, vertically aligned, they are routed from the upper end to the connection strips (16) to be assigned to them, in that, starting from a predetermined marking line (M) and one after another in each case, the connection strips (16) associated with the internal side are fitted upwards and the connection strips associated with the external side are fitted downwards.

## Revendications

1. Répartiteur comportant une unité de support (1) pour l'équipement aussi bien avec des barrettes de connexion (16, 17), utilisées pour le raccordement et la liaison de lignes électriques de départ et d'arrivée, d'un répartiteur d'une installation de télécommunication, qu'avec d'autres unités fonctionnelles, qui forment conjointement un tel répartiteur, et dans lequel, pour l'établissement d'un état de montage prêt à être utilisé, les barrettes de connexion peuvent être reliées pour leur part de façon fixe à au moins un élément de retenue (22) utilisé pour ce montage final, et l'unité de support (1) est formée par un profilé métallique extrudé (2), agencé essentiellement en forme de U, que les éléments de paroi individuels (8,9 et 14) de ce profilé possèdent, pour la fixation des unités fonctionnelles prévues (22,25,24,20), des moulures respectives (11,12,13,4...6,7) qui respectivement s'étendent continûment dans la direction longitudinale et qui peuvent être utilisées en tant que canaux de vissage, de serrage et d'enfichage, et dans lequel sur la face frontale de chaque branche (8,9) du profilé extrudé en forme de U (1) est prévue une moulure (2,3) qui s'étend continûment dans la direction longitudinale et est utilisée pour la fixation des barrettes de connexion, caractérisé par le fait qu'une moulure au moins de forme semi-cylindrique (2) est formée sur le bord libre d'une branche (8) et qu'un canal de vissage (3) est formé sur le bord libre de l'autre branche (9), chaque barrette de connexion (16,17) pouvant être enfichée sur la moulure (2) en raison d'une configuration présente sur l'une de ses faces frontales respectives et adaptée à cette moulure, et que l'autre face frontale peut être fixée, au moyen d'une bride de fixation correspondante (28), moyennant l'utilisation dudit canal de vissage (3).

2. Répartiteur suivant la revendication 1, caractérisé par le fait qu'il est prévu une configuration, adaptée à la moulure (2), respectivement sur le bord libre d'au moins une barrette qui s'étend dans la direction longitudinale de la barrette de raccordement.

3. Répartiteur suivant la revendication 1, caractérisé par le fait qu'une configuration adaptée à la moulure (2) est présente sur la partie d'extrémité supérieure et sur la partie d'extrémité inférieure de chaque barrette.

4. Répartiteur suivant l'une des revendications précédentes, caractérisé par le fait que dans le cas de leur montage suivant une orientation verticale, les lignes (18) de ce qu'on appelle la face intérieure s'étendent depuis l'extrémité supérieure jusqu'aux barrettes de connexion (16) qui leur sont associées, et qu'à partir d'une ligne prédéterminée de marquage (M), les barrettes de connexion (16) associées à la face intérieure sont disposées successivement vers le haut et que les barrettes de connexion associées à la face extérieure sont disposées successivement vers le bas.
